# FASCICULE DE BREVET EUROPEEN

(11) **EP 0 756 887 B1**
(45) Date de publication et mention de la délivrance du brevet: **05.12.2001**
(21) Numéro de dépôt: 96401692.7
(22) Date de dépôt: 29.07.1996
(51) Int. Cl.: B01D 53/22

(54) **Procédé et appareil de chauffage d'un gaz**
Verfahren und Vorrichtung zum Aufheizen eines Gases
Gas heating method and apparatus

(30) Priorité: 31.07.1995 FR 9509321
(43) Date de publication de la demande: 05.02.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Goeler, Patrice, 94700 Maisons-Alfort (FR); Barrey, Lionel, 94220 Charenton-le-Pont (FR)
(74) Mandataire: Le Moenner, Gabriel

(56) Documents cités:
- EP-A- 0 362 436
- EP-A- 0 517 570
- EP-A- 0 659 464
- WO-A-92/13628
- FR-A- 2 571 270

## Description

La présente invention concerne le domaine des procédés de chauffage d'un gaz par échange dans un échangeur avec un fluide chaud.

Elle s'applique en particulier au cas du chauffage d'un gaz avant sa séparation par voie membranaire, et plus particulièrement au cas du chauffage d'un débit d'air avant sa séparation membranaire en vue d'obtenir en sortie résiduaire (ou rejet) du séparateur membranaire un mélange gazeux enrichi en azote.

Rappelons ici que le principe de la séparation de gaz par voie membranaire est que, sous l'effet d'une différence de pression partielle de part et d'autre de la membrane, on obtient, côté (ou sortie) perméat, un mélange à basse pression, enrichi en composants les plus perméables, et en sortie résiduaire de membrane (souvent appelé aussi "côté résidu" ou "côté rejet"), un mélange à une pression proche de la pression d'alimentation (du mélange entrant) et qui est enrichi en composants les moins perméables.

A titre d'illustration, on utilise ainsi pour produire de l'azote à partir d'air, des membranes semi-perméables présentant de bonnes propriétés de séparation de l'oxygène par rapport à l'azote (sélectivité), par exemple du type polyimide, le mélange riche en azote étant obtenu en sortie résiduaire du séparateur membranaire.

On peut encore citer l'exemple de la production d'hydrogène ou de CO, par voie membranaire, au cours de laquelle on procède le plus souvent à une récupération à partir de mélanges issus de certaines industries, que l'on sépare sur des membranes semi-perméables présentant de bonnes propriétés de séparation de l'hydrogène par rapport aux autres composants du mélange, par exemple de type polyaramide, le mélange enrichi en hydrogène étant alors obtenu en sortie perméat du séparateur membranaire, le mélange enrichi selon les cas en hydrocarbures ou en CO étant obtenu en sortie résiduaire du séparateur membranaire.

Il apparaît alors que les performances de séparation obtenues dépendront très largement des conditions d'utilisation de la membrane, notamment la température, la pression d'alimentation de la membrane, ou encore la teneur du mélange d'alimentation en le composant que l'on souhaite extraire côté perméat ou côté résiduaire.

On sait ainsi, pour ce qui est de la température, que le plus souvent, en augmentant la température de fonctionnement de la membrane (donc la température du mélange entrant qui y transite), la perméabilité et donc la productivité de la membrane augmentent.

Ainsi, et selon le niveau de performances recherché, on procède le plus souvent à une étape de chauffage du mélange gazeux à séparer, avant son arrivée sur le séparateur membranaire.

Cette étape de chauffage est le plus couramment pratiquée à l'aide d'un réchauffeur électrique, mis en oeuvre à l'aide d'un générateur de créneaux d'impulsions électriques, en fonction d'une mesure de la température du gaz à chauffer. Cette méthode de chauffage électrique du gaz se révèle très coûteuse, car très consommatrice d'énergie, contribuant par exemple de façon significative au coût de l'azote produit par voie membranaire.

On a également évoqué l'idée de récupérer les calories de l'huile utilisée comme fluide de refroidissement du compresseur de gaz présent dans de telles installations de séparation de gaz par voie membranaire. Cette récupération de calories se révèle néanmoins extrêmement délicate du fait qu'elle doit s'effectuer sans perturber le circuit de refroidissement du compresseur, tout en étant compatible avec l'obtention d'une régulation performante de la température du gaz chauffé.

On peut ainsi citer le document EP-A-362 436, qui prévoit l'utilisation d'une partie de l'huile du compresseur, pour chauffer dans un échangeur, de l'air comprimé avant sa séparation sur un module membranaire. Le contrôle de la température de l'air ainsi chauffé est obtenu par l'utilisation d'une ligne de by-pass d'une partie du débit d'huile arrivant sur l'échangeur, ligne dans laquelle est présente une vanne de régulation permettant de faire plus ou moins varier la quantité d'huile circulant dans la ligne de by-pass. Cette configuration représente incontestablement un risque dans le cas où un disfonctionnement ou encore une panne de la vanne de régulation se produirait, l'ensemble du débit d'huile parvenant alors à l'échangeur, et subissant donc l'opération de chauffage, entraînant alors une possible surchauffe de l'air traité dans le séparateur membranaire.

Dans ce contexte, un objectif de la présente invention, est de proposer un procédé amélioré de chauffage d'un gaz par passage dans un échangeur où circule un fluide chaud, permettant d'obtenir ;
- un abaissement significatif du coût de l'opération de chauffage par rapport aux procédés traditionnels de chauffage électrique ;
- une régulation performante de la température du gaz chauffé, offrant de bonnes garanties de fiabilité et sécurité, .

Le procédé de chauffage d'un gaz par passage dans un échangeur selon l'invention comporte la mise en oeuvre des mesures suivantes :
- on dispose d'un débit D0 d'un fluide chaud sur une ligne dite entrante, reliée en sa partie amont à une source du fluide chaud et en sa partie aval à l'entrée d'une première voie (que l'on peut qualifier de voie chaude), d'un échangeur ;
- on prélève une partie du débit D0, avant qu'il n'atteigne l'entrée de la voie chaude de l'échangeur, par une ligne de dérivation connectée à un point dit primaire de la ligne entrante, situé entre la source de fluide chaud et l'entrée de la voie chaude ;
- on fait circuler dans une seconde voie de l'échangeur (que l'on peut qualifier de voie froide), le gaz à chauffer, de façon à réaliser dans l'échangeur un échange de calories entre le gaz à chauffer et le fluide chaud, afin d'obtenir en sortie de voie froide un gaz chauffé, et en sortie de voie chaude, un fluide chaud refroidi ;
- on fait ressortir le fluide chaud refroidi de la voie chaude de l'échangeur par une ligne dite sortante, qui est configurée selon l'une des configurations suivantes :
   (i) la ligne sortante relie la sortie de la voie chaude de l'échangeur à la source de fluide chaud, la ligne de dérivation reliant alors le point primaire de la ligne entrante à un point dit secondaire de la ligne sortante ;
   (ii) la ligne de dérivation relie le point primaire de la ligne entrante à la source de fluide chaud, la ligne sortante étant alors raccordée en sa partie aval à un point dit secondaire de la ligne de dérivation ;
- on établit une perte de charge sur la ligne de dérivation entre le point primaire et le point secondaire ;
- on régule la température du gaz chauffé obtenu en sortie de la voie froide de l'échangeur à l'aide d'une vanne de régulation de débit située dans l'une des deux positions suivantes : sur la ligne entrante, entre le point primaire et l'entrée de la voie chaude ou bien sur la ligne sortante, entre la sortie de la voie chaude de l'échangeur et le point secondaire.

Le procédé selon l'invention exploite la combinaison des mesures suivantes :
- la mise en place d'une perte de charge contrôlée sur une portion choisie du système, afin de permettre de ne diriger vers la voie chaude de l'échangeur qu'une relativement faible portion du débit D0 et éviter ainsi de perturber le fonctionnement normal de la source de fluide chaud de laquelle est prélevé provisoirement une certaine quantité de fluide. En pratique, il s'est avéré que le plus souvent, la circulation dans la voie chaude de l'échangeur de seulement quelques pourcents (par exemple moins de 5%) du débit D0 donnait des résultats satisfaisants ;
- d'une régulation de la température du gaz chauffé obtenu à la sortie de la voie froide de l'échangeur, à l'aide d'une vanne de régulation de débit placée de façon déterminée, sur la ligne entrante entre le point primaire et l'entrée de la voie chaude de l'échangeur (régulation du débit entrant), ou bien sur la ligne sortante entre la sortie de la voie chaude de l'échangeur et le point secondaire (régulation du débit sortant).

La perte de charge introduite doit donc être déterminée dans chaque cas, afin d'être d'une part suffisante pour qu'une partie du débit D0 atteigne effectivement l'échangeur et remplisse son rôle dans l'échange thermique recherché, mais pas trop élevée pour que le fonctionnement de la source de fluide chaud ne soit pas trop perturbé.

On pourra réaliser selon le cas considéré la perte de charge dans la ligne de dérivation selon de multiples méthodes. On citera à titre illustratif ici les moyens suivants :
- l'utilisation d'un diamètre de la ligne de dérivation inférieur à celui de la ligne entrante au point primaire où la ligne de dérivation est connectée,
- la mise en place sur la ligne de dérivation, entre le point primaire et le point secondaire d'une restriction calibrée,
- la mise en place sur la ligne de dérivation, toujours entre le point primaire et le point secondaire, d'une vanne de laminage, ou encore
- la simple mise en place au point primaire de connexion entre ligne entrante et ligne de dérivation d'un coude.

On pourra également envisager une combinaison de certains de ces moyens.

Avantageusement, la perte de charge introduite se situera dans la gamme de 50 mbar à 3 bar, préférentiellement dans la gamme de 100 mbar à 1 bar, mais encore plus préférentiellement inférieure ou égale à 600 mbar.

Comme vanne de régulation, on utilisera avantageusement une vanne de régulation peu onéreuse à deux voies, telle qu'une vanne thermostatique, une électrovanne tout ou rien à fréquence d'ouverture constante mais durée d'ouverture variable selon le résultat d'une mesure de la température du gaz chauffé obtenu à la sortie de la voie froide de l'échangeur, ou encore une vanne à ouverture progressive.

Comme il apparaîtra clairement à l'homme du métier, la source de fluide chaud pourra recouvrir de nombreuses possibilités ; on citera ici, à titre purement illustratif, le cas d'une source de fluide chaud constituée par un compresseur de gaz, le fluide étant alors constitué par l'huile utilisée pour le refroidissement du compresseur (mais également pour ses propriétés de lubrification), ou encore à titre de second exemple, une source de fluide chaud constituée d'eau chaude.

On notera que lorsque le fluide chaud utilisé est de l'huile, et que l'organe de régulation de débit choisi est une électrovanne (qui s'ouvre et se ferme avec une fréquence annuelle très élevée selon les cas), le fait que cette électrovanne fonctionne en présence d'huile (puisque située sur la ligne entrante ou sortante de l'échangeur) améliore considérablement sa fiabilité.

Selon une des mises en oeuvre de l'invention, le gaz chauffé obtenu en sortie de voie froide de l'échangeur est dirigé ultérieurement vers un séparateur de gaz par voie membranaire où il subit une opération de séparation. Le gaz à chauffer pourra ainsi être par exemple constitué d'air pour produire par voie membranaire un mélange gazeux à base d'azote contenant une concentration résiduelle d'oxygène, ou encore être constitué d'un mélange gazeux issu de certaines industries, par exemple riche en hydrogène et en CO, pour obtenir par voie membranaire, un mélange gazeux riche en CO à la sortie résiduaire du séparateur et un mélange riche en hydrogène en sortie perméat de ce même séparateur.

La mise en place d'une perte de charge contrôlée dans la ligne de dérivation assure une circulation continue de la majeure partie du débit D0 de fluide chaud vers la source (par exemple d'huile dans le compresseur) et offre donc de ce fait une excellente sécurité de fonctionnement.

A titre de comparaison, l'utilisation sur la ligne de dérivation d'une vanne de régulation (selon le document ci-dessus évoqué) pourrait, en cas d'incident, fermer la ligne de dérivation, ce qui conduirait à mettre en oeuvre dans l'échangeur l'ensemble du débit D0 de fluide chaud avec tous les risques de surchauffe déjà signalés.

Au contraire, dans le cas de la présente invention, même si un incident de fonctionnement survenait au niveau de la vanne de régulation, la configuration adoptée assure une parfaite sécurité :
- si celle-ci reste anormalement totalement ouverte, la mise en place de la perte de charge contrôlée dans la ligne de dérivation assure qu'en toute état de cause seule une faible portion du débit de fluide chaud circule dans l'échangeur (élimination du risque de surchauffe);
- si celle-ci reste anormalement totalement fermée, tout le débit circule alors dans la ligne de dérivation, ce qui assure le fait que le fonctionnement de la source de fluide chaud n'est pas perturbé.

Les formulations utilisées selon l'invention de "point primaire" et "point secondaire" correspondant respectivement à une intersection ligne entrante - ligne. de dérivation, et ligne de dérivation - ligne sortante, on évoquera indifféremment le "point primaire de la ligne entrante", le "point primaire de la ligne de dérivation", le "point secondaire de la ligne de dérivation", le "point secondaire de la ligne sortante".

L'invention concerne également un appareil de chauffage d'un gaz convenant notamment pour la mise en oeuvre du procédé précédemment décrit, comprenant :
- une source d'un fluide chaud ;
- une ligne de transport de fluide, dite entrante, reliant la source de fluide chaud à l'entrée d'une première voie (que l'on peut qualifier de voie chaude) d'un échangeur ;
- une ligne de transport de fluide, dite sortante, connectée en sa partie amont à la sortie de la voie chaude de l'échangeur ;
- une source de gaz à chauffer ;
- une ligne froide reliant la source de gaz à chauffer à l'entrée d'une seconde voie de l'échangeur (que l'on peut qualifier de voie froide) ;
caractérisé en ce qu'il comporte
- une ligne de transport de fluide dite de dérivation, connectée en sa partie amont à un point dit primaire de la ligne entrante, situé entre la source de fluide chaud et l'entrée de la voie chaude de l'échangeur, et en sa partie aval selon l'une des deux configurations suivantes :
   (i) la ligne sortante relie la sortie de la voie chaude de l'échangeur à la source de fluide chaud, la ligne de dérivation reliant alors le point primaire à un point dit secondaire de la ligne sortante ;
   (ii) la ligne de dérivation relie le point primaire à la source de fluide chaud, la ligne sortante étant alors raccordée en sa partie aval à un point dit secondaire de la ligne de dérivation ;
- un moyen de création d'une perte de charge sur la ligne de dérivation entre le point primaire et le point secondaire ;
- une vanne de régulation de débit située dans l'une des deux positions suivantes : sur la ligne entrante, entre le point primaire et l'entrée de la voie chaude de l'échangeur ou bien sur la ligne sortante, entre la sortie de la voie chaude de l'échangeur et le point secondaire.

D'autres caractéristiques et avantages de la présente invention ressortiront de la description suivante de modes de réalisation donnée à titre illustratif mais nullement limitatif, faite en relation avec les dessins annexés, sur lesquels :
- la figure 1 est une représentation schématique d'un appareil convenant pour la mise en oeuvre du procédé selon l'invention ;
- la figure 2 est une représentation schématique d'un autre appareil convenant pour la mise en oeuvre du procédé selon l'invention ;
- la figure 3 est une représentation schématique d'une installation de production d'azote impur par séparation membranaire à partir d'air comprimé intégrant un appareil de chauffage (de l'air avant son arrivée sur le séparateur membranaire) selon l'invention.

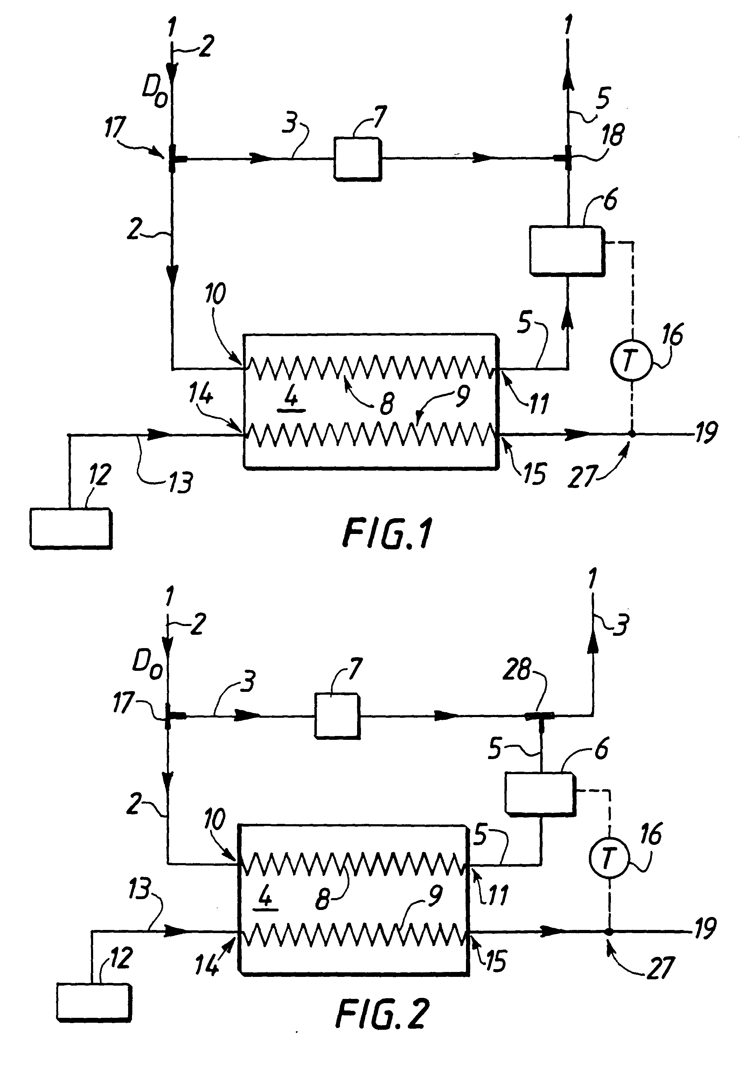

La figure 1 illustre un des modes de réalisation de l'invention, dans lequel on dispose d'un débit D0 de fluide chaud provenant d'une source de fluide chaud 1 (par exemple de l'huile ou encore de l'eau chaude), qui est dirigé le long d'une ligne de fluide entrante 2 vers une des voies (voie chaude 8) d'un échangeur 4.

Sont symbolisées par les références 10 et 11, respectivement, l'entrée de la voie chaude et la sortie de la voie chaude.

On prélève, grâce à une ligne de dérivation 3, une partie du débit D0 de fluide chaud avant que celui-ci n'atteigne l'entrée 10 de la voie chaude de l'échangeur.

En parallèle, circule dans une seconde voie (voie froide 9) de l'échangeur, du gaz à réchauffer provenant d'une source 12 de gaz à réchauffer via la ligne froide de gaz 13. On a symbolisé ici par les références 14 et 15, respectivement, l'entrée de la voie froide de l'échangeur et la sortie de la voie froide de l'échangeur. Après circulation dans l'échangeur et réalisation de l'échange thermique, le gaz réchauffé obtenu en sortie 15 de la voie froide est dirigé vers un poste utilisateur 19 d'un tel gaz réchauffé.

Le fluide chaud refroidi obtenu en sortie 11 de la voie chaude de l'échangeur est quant à lui dirigé, via une ligne sortante 5, vers la source de fluide chaud 1.

On notera que la ligne de dérivation 3, connectée entre le point primaire 17 de la ligne entrante 2 et le point secondaire 18 de la ligne sortante 5, réinjecte le fluide chaud prélevé au point 17 dans la ligne 5 qui se dirige vers la source de fluide chaud.

Pour le mode de réalisation représenté, on a symbolisé par la référence 7, un moyen de création d'une perte de charge (par exemple une restriction calibrée) intercalé sur la ligne de dérivation entre le point primaire 17 et le point secondaire 18, et la réalisation au point 17 d'un coude entre les lignes 2 et 3.

Comme largement développé précédemment, on pourrait envisager d'autres formes de réalisation de la perte de charge sur la ligne 3, telles que par exemple la simple utilisation du coude au point 17 (sans utilisation du moyen 7) ou encore l'utilisation au point de connexion 17 d'un diamètre de la ligne 3 inférieur au diamètre de la ligne 2.

Ce mode de réalisation illustre par ailleurs, en combinaison avec ce moyen de création d'une perte de charge 7, une vanne de régulation symbolisée par la référence 6, située sur la ligne sortante 5 entre la sortie 11 et le point secondaire 18, permettant de réguler la température du gaz réchauffé obtenu en sortie 15 de la voie froide de l'échangeur 4 grâce notamment à une mesure (16) de température de ce gaz réchauffé effectuée au point symbolisé 27 sur la figure. Pour des raisons de simplicité, il n'a pas été représenté sur cette figure le bloc de régulation associé à un tel fonctionnement (par exemple de type PID).

La figure 2 illustre une variante du mode de réalisation représenté à la figure 1, où cette fois la ligne de dérivation 3 est connectée en sa partie amont au point primaire 17 de la ligne entrante et en sa partie aval à la source 1 de fluide chaud. La ligne sortante 5 relie alors en sa partie amont la sortie 11 de la voie chaude de l'échangeur à un point secondaire 28 situé sur la ligne de dérivation 3 entre le point primaire 17 et la source de fluide chaud 1. On notera qu'une telle configuration au niveau du point secondaire 28 crée un effet Venturi (lié à la géométrie du point secondaire et au fait que le débit de fluide chaud refroidi parvenant au point secondaire est en général bien plus faible que celui qui circule dans la ligne de dérivation en amont de ce point secondaire).

Les deux modes de réalisation illustrés en figures 1 et 2 mettent en oeuvre une vanne de régulation située sur la ligne sortante entre la sortie de la voie chaude de l'échangeur et le point secondaire (18 ou 28). Comme signalé précédemment, on aurait pu également avantageusement utiliser une vanne de régulation située sur la ligne entrante 2, entre le point primaire 17 et l'entrée 10 de la voie chaude 8 (régulation du débit entrant dans l'échangeur).

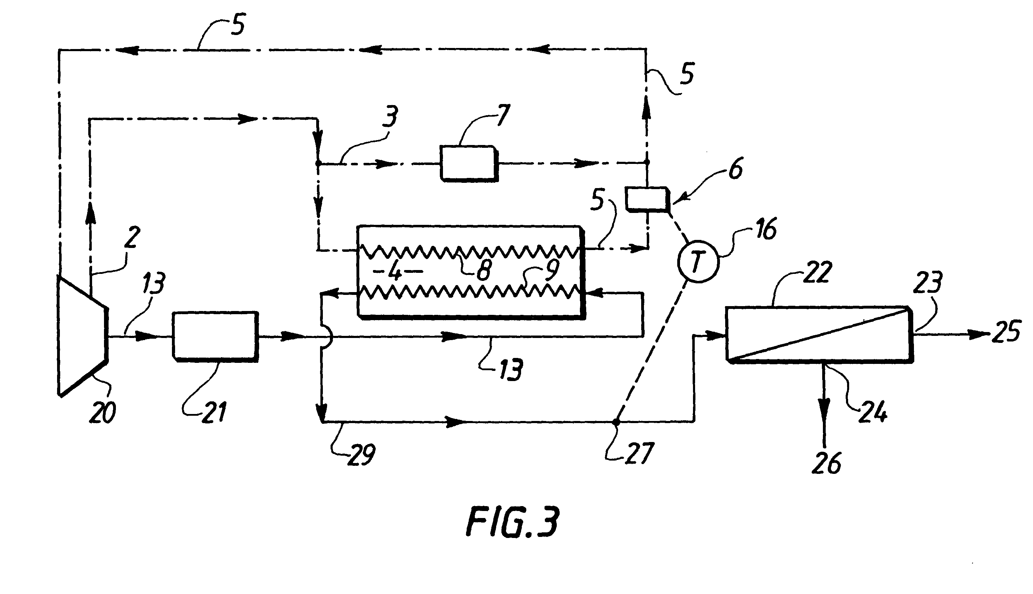

La figure 3 illustre pour sa part le cas d'une installation de production d'azote impur par voie membranaire, à partir d'air comprimé, intégrant un appareil de chauffage de l'air comprimé avant son arrivée sur le séparateur membranaire, telle que celui décrit en relation avec la figure 1.

La source 12 de gaz à chauffer est alors ici constituée par un compresseur d'air 20, qui fournit à l'échangeur 4, le long d'une ligne froide 13 de l'air à chauffer. L'air chauffé obtenu en sortie froide de l'échangeur étant dirigé (par une ligne référencée 29) vers un séparateur membranaire 22, où il est traité, de façon à produire en sortie résiduaire 23 du séparateur un mélange gazeux à base d'azote comportant une concentration résiduelle d'oxygène, ce mélange gazeux étant dirigé vers un poste utilisateur 25 d'un tel mélange à base d'azote, alors que l'on produit en sortie perméat 24 du séparateur 22 un mélange à basse pression enrichi en oxygène, que l'on peut selon les cas envoyer à l'atmosphère extérieure ou encore vers un poste utilisateur 26 d'un tel mélange gazeux enrichi en oxygène.

On notera que l'air comprimé fourni par le compresseur 20 est, sur le mode de réalisation représenté, avant d'atteindre l'échangeur 4, au préalable traité dans une unité 21 de conditionnement d'air, où sont réalisées des opérations telles que déshuilage de l'air, séchage de l'air, ou encore élimination substantielle de ses particules.

L'air comprimé est chauffé dans l'échangeur par échange thermique avec un débit d'huile chaude circulant dans la voie chaude de l'échangeur, à contre courant, en provenance du compresseur 20 via la ligne entrante 2 (le compresseur 20 constitue donc ici à la fois la source de gaz à chauffer 12 et la source de fluide chaud 1 des figures 1 et 2).

Si cette figure illustre une géométrie de circulation à contre courant dans l'échangeur, une circulation des deux flux (fluide chaud/gaz à chauffer) à co-courant pourrait être également envisagée.

L'huile refroidie obtenue en sortie de la voie chaude 8 de l'échangeur est alors dirigée, via la ligne sortante 5, vers le compresseur d'air 20 où elle retrouve le circuit normal de refroidissement du compresseur.

Une installation telle que celle décrite en relation avec la figure 3 a été utilisée pour la mise en oeuvre d'un exemple de réalisation de l'invention.

Cet exemple devait permettre la production, en sortie résiduaire du séparateur 22, d'un débit de 350 Nm³/h d'azote de pureté 98%, à partir d'un air chauffé à une température de l'ordre de 41 °C.

Les conditions de fonctionnement et performances obtenues sont décrites ci-dessous :
- utilisation d'un compresseur KAESER ESB 250 à vis lubrifiée;
- débit d'huile DO : environ 24 m³/h;
- débit d'air à chauffer : environ 830 Nm³/h;
- débit d'huile parvenant à l'échangeur : environ 3 % du débit DO;
- moyen de perte de charge "7" : une restriction calibrée;
- perte de charge introduite sur la ligne de dérivation : de l'ordre de 500 mbar;
- vanne de régulation "6" : une électrovanne tout ou rien;
- bilan des températures aux entrées/sorties de l'échangeur :
   . température de l'air en entrée de voie froide : ≅ 19 °C,
   . température de l'air en sortie de voie froide : ≅ 41 °C,
   . température de l'huile en entrée de voie chaude : ≅ 66 °C,
   . température de l'huile en sortie de voie chaude : ≅ 46 °C,

L'ensemble des mesures effectuées ont permis de mettre en évidence un écart entre la température de l'air chauffé obtenu en sortie de voie froide et le point de consigne désiré se situant toujours en deçà de 0,1 °C, atteignant en fait la limite de résolution de l'appareillage utilisé, et convenant parfaitement pour l'application de séparation membranaire située en aval.

Cet exemple de mise en oeuvre illustre clairement le fait qu'il est possible selon l'invention de réaliser de façon économique le chauffage d'un gaz, par récupération des calories d'une source de fluide chaud, en évitant ainsi l'utilisation onéreuse d'un chauffage électrique, ceci en atteignant d'excellentes performances de régulation de la température du gaz chauffé sans perturbation significative du fonctionnement de la source de fluide chaud et dans les conditions de sécurité requises.

Comme précédemment signalé, le fluide chaud utilisé ici étant de l'huile, et l'organe de régulation de débit choisi étant une électrovanne, le fait que cette électrovanne fonctionne en présence d'huile améliore considérablement sa fiabilité (dans le présent exemple, la vanne s'ouvrant et se fermant de l'ordre d'une fois toutes les 10 s).

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art. Ainsi, bien que l'invention ait été tout particulièrement illustrée à l'aide de cas où le fluide chaud est de l'huile provenant d'un compresseur, elle trouve applications dans bien d'autres cas de fluides chauds, tels que par exemple de l'eau chaude.

De même, si l'application du réchauffage de gaz avant séparation membranaire a tout particulièrement été décrite et exemplifiée, le procédé selon l'invention s'applique à bien d'autres domaines parmi lesquels on peut citer l'application du chauffage de bâtiments.

## Revendications

1. Procédé de chauffage d'un gaz selon lequel on met en oeuvre les mesures suivantes :
- on dispose d'un débit Do d'un fluide chaud sur une ligne (2) entrante, reliée en sa partie amont à une source (1) du fluide chaud et en sa partie aval à l'entrée (10) d'une première voie (8) d'un échangeur (4);
- on prélève une partie du débit Do, avant qu'il n'atteigne l'entrée de la première voie, à l'aide d'une ligne (3) de dérivation connectée en sa partie amont à un point (17) primaire de la ligne entrante situé entre la source de fluide chaud et ladite entrée (10);
- on fait circuler dans une seconde voie (9) de l'échangeur, le gaz à chauffer, de façon à réaliser dans l'échangeur un échange de calories entre le gaz à chauffer et le fluide chaud, afin d'obtenir en sortie (15) de seconde voie un gaz chauffé, et en sortie (11) de première voie, un fluide chaud refroidi ;
- on fait ressortir le fluide chaud refroidi de la première voie par une ligne (5) sortante, qui est configurée selon l'une des deux configurations suivantes :
(i) la ligne sortante relie la sortie (11) de la première voie de l'échangeur à la source (1) de fluide chaud, la ligne de dérivation reliant alors ledit point primaire (17) à un point (18) secondaire de la ligne sortante;
(ii) la ligne de dérivation relie ledit point primaire (17) à la source (1) de fluide chaud, la ligne sortante étant alors raccordée en sa partie aval à un point (28) secondaire de la ligne de dérivation ;
- on établit une perte de charge (7) sur la ligne de dérivation entre le point primaire et le point secondaire ;
- on régule (16) la température du gaz chauffé obtenu en sortie de la seconde voie de l'échangeur à l'aide d'une vanne (6) de régulation de débit située dans l'une des deux positions suivantes : sur la ligne entrante, entre le point primaire et l'entrée de la première voie de l'échangeur, ou bien sur la ligne sortante, entre la sortie de la première voie de l'échangeur et le point secondaire.

2. Procédé selon la revendication 1, **caractérisé en ce que** ladite perte de charge se situe dans la gamme de 50 mbar à 3 bar.

3. Procédé selon la revendication 2, **caractérisé en ce que** ladite perte de charge se situe dans la gamme de 100 mbar à 1 bar.

4. Procédé selon l'une des revendications 1 à 3, **caractérisé en ce que** l'on introduit ladite perte de charge selon l'une des trois méthodes suivantes :
- en utilisant un diamètre de la ligne de dérivation inférieur à celui de la ligne entrante audit point primaire où la ligne de dérivation est connectée ;
- en utilisant, audit point primaire où la ligne de dérivation est connectée, un coude ;
- par l'utilisation, sur la ligne de dérivation, entre le point primaire et le point secondaire d'un moyen (7) de création d'une perte de charge.

5. Procédé selon l'une des revendications 1 à 4, **caractérisé en ce que** ladite régulation de débit est obtenue selon l'une des méthodes suivantes :
- par l'utilisation d'une vanne de régulation de type thermostatique;
- par l'utilisation d'une électrovanne tout ou rien à fréquence d'ouverture constante et durée d'ouverture variable selon le résultat d'une mesure de la température dudit gaz chauffé obtenu à la sortie de la seconde voie de l'échangeur;
- par l'utilisation d'une vanne à ouverture progressive.

6. Procédé selon l'une des revendications 1 à 5, **caractérisé en ce que** la source (1) de fluide chaud est un compresseur de gaz (20) et **en ce que** le fluide chaud est de l'huile constituant le fluide de refroidissement du compresseur.

7. Procédé selon la revendication 6, **caractérisé en ce que** ledit gaz chauffé obtenu en sortie de la première voie de l'échangeur est dirigé vers un séparateur (22) de gaz par voie membranaire.

8. Procédé selon l'une des revendications 6 ou 7, **caractérisé en ce que** ledit gaz à chauffer est de l'air.

9. Procédé selon l'une des revendications 1 à 5, **caractérisé en ce que** ledit fluide chaud est de l'eau chaude.

10. Appareil de chauffage d'un gaz convenant notamment pour la mise en oeuvre du procédé selon l'une des revendications 1 à 9, comprenant :
- une source (1) de fluide chaud ;
- une ligne (2) entrante de transport de fluide, reliant la source de fluide chaud à l'entrée (10) d'une première voie (8) d'un échangeur (4);
- une ligne (5) sortante de transport de fluide, connectée en sa partie amont à la sortie de la dite première voie ;
- une source (12, 20) de gaz à chauffer ; et
- une ligne (13) froide de gaz, reliant la source de gaz à chauffer à l'entrée (14) d'une seconde voie (9) de l'échangeur ;
**caractérisé en ce qu'**il comporte
- une ligne (3) de dérivation, connectée en sa partie amont à un point (17) primaire de la ligne entrante, situé entre la source de fluide chaud et l'entrée de la dite première voie de l'échangeur, et en sa partie aval selon l'une des deux configurations suivantes :
(i) la ligne sortante relie la sortie de la première voie de l'échangeur à la source de fluide chaud, la ligne de dérivation reliant alors le point primaire à un point (18) secondaire de la ligne sortante ;
(ii) la ligne de dérivation relie le point primaire à la source de fluide chaud, la ligne sortante étant alors raccordée en sa partie aval à un point (28) secondaire de la ligne de dérivation ;
- un moyen (7) de création d'une perte de charge sur la ligne de dérivation entre le point primaire et le point secondaire ;
- une vanne (6) de régulation de débit située dans l'une des deux positions suivantes : sur la ligne entrante, entre le point primaire et l'entrée de la dite première voie de l'échangeur, ou bien sur la ligne sortante, entre la sortie de la dite première voie de l'échangeur et le point secondaire.

11. Appareil selon la revendication 10, **caractérisé en ce que** ledit moyen de création d'une perte de charge est obtenu par l'utilisation d'un diamètre de ligne de dérivation inférieur au diamètre de la ligne entrante au point primaire où est connectée la ligne de dérivation.

12. Appareil selon la revendication 10, **caractérisé en ce que** ledit moyen de création d'une perte de charge est obtenu par l'utilisation, au point primaire où est connectée la ligne de dérivation, d'un coude.

13. Appareil selon la revendication 10, **caractérisé en ce que** ledit moyen de création d'une perte de charge est constitué d'une restriction calibrée ou d'une vanne de laminage.

14. Appareil selon l'une des revendications 10 à 13, **caractérisé en ce que** la dite vanne de régulation de débit est l'une des vannes du groupe constitué des vannes de type thermostatique, des électrovannes tout ou rien à fréquence d'ouverture constante et durée d'ouverture variable, et des vannes à ouverture progressive.

15. Appareil selon l'une des revendications 10 à 14, **caractérisé en ce que** la source de fluide chaud est un compresseur de gaz (20) et **en ce que** le fluide chaud est constitué par l'huile constituant le fluide de refroidissement du compresseur.

16. Appareil selon l'une des revendications 10 à 14, **caractérisé en ce que** ladite source de fluide chaud est une source d'eau chaude.

## Patentansprüche

1. Verfahren zur Aufheizung eines Gases, gemäß dem die folgenden Maßnahmen ergriffen werden:
- es wird für einen Durchsatz D₀ eines warmen Fluids auf einer Eingangsleitung (2) gesorgt, die an ihrem stromaufwärtigen Teil an eine Quelle (1) für ein warmes Fluid und an ihrem stromabwärtigen Teil an den Einlaß (10) eines ersten Kanals (8) eines Wärmetauschers (4) angeschlossen ist,
- es wird ein Teil des Durchsatzes D₀ entnommen bevor er den Einlaß des ersten Kanals erreicht mittels einer Abzweigleitung (3), die an ihrem stromaufwärtigen Teil an einem primären Punkt (17) der Eingangsleitung angeschlossen, der zwischen der Quelle für warmes Fluid und dem Einlaß (10) liegt,
- in einem zweiten Kanal (9) des Wärmetauschers wird das zu erwärmende Gas in Umlauf gebracht, so daß in dem Wärmetauscher ein Austausch von Kalorien zwischen dem zu erwärmenden Gas und dem warmen Fluid herbeigeführt wird, um am Auslaß (15) des zweiten Kanals ein erwärmtes Gas und am Auslaß (11) des ersten Kanals ein kühler gewordenes warmes Fluid zu erhalten,
- das kühler gewordene warme Fluid des ersten Kanals wird durch eine Austrittsleitung (5) wieder abgeleitet, die gemäß einer der zwei folgenden Konfigurationen gestaltet ist:
(i) die Austrittsleitung verbindet den Auslaß (11) des ersten Kanals des Wärmetauschers mit der Quelle (1) für warmes Fluid, wobei die Abzweigleitung dann den primären Punkt (17) mit einem sekundären Punkt (18) der Austrittsleitung verbindet,
(ii) die Abzweigleitung verbindet den primären Punkt (17) mit der Quelle (1) für warmes Fluid, wobei die Austrittsleitung dann an ihrem stromabwärtigen Ende an einem sekundären Punkt (28) der Abzweigleitung angeschlossen ist,
- auf der Abzweigleitung wird zwischen dem primären Punkt und dem sekundären Punkt ein Druckabfall (7) erzeugt,
- die Temperatur des am Auslaß des zweiten Kanals des Wärmetauschers erhaltenen erwärmten Gases wird mittels eines Durchsatzregelventils (6) geregelt (16), das an einer der zwei folgenden Stellen angeordnet ist: auf der Eingangsleitung zwischen dem primären Punkt und dem Einlaß des ersten Kanals des Wärmetauschers oder aber auf der Austrittsleitung zwischen dem Auslaß des ersten Kanals des Wärmetauschers und dem sekundären Punkt.

2. Verfahren nach Anspruch 1, **dadurch gekennzeichnet, daß** der Druckabfall in dem Bereich von 50 mbar bis 3 bar liegt.

3. Verfahren nach Anspruch 2, **dadurch gekennzeichnet, daß** der Druckabfall in dem Bereich von 100 mbar bis 1 bar liegt.

4. Verfahren nach einem der Ansprüche 1 bis 3,
**dadurch gekennzeichnet, daß** der Druckabfall gemäß einer der drei folgenden Vorgehensweisen eingeführt wird:
- indem für die Abzweigleitung ein Durchmesser verwendet wird, der kleiner als derjenige der Eingangsleitung am primären Punkt ist, an dem die Abzweigleitung angeschlossen ist,
- indem am primären Punkt, an dem die Abzweigleitung angeschlossen ist, ein Winkelstück verwendet wird,
- durch die Verwendung eines Mittels (7) zur Erzeugung eines Druckabfalls auf der Abzweigleitung zwischen dem primären Punkt und dem sekundären Punkt.

5. Verfahren nach einem der Ansprüche 1 bis 4,
**dadurch gekennzeichnet, daß** die Regelung des Durchsatzes gemäß einer der folgenden Vorgehensweisen erzielt wird:
- durch Verwendung eines Regelventils der thermostatischen Art,
- durch Verwendung eines entweder ganz geöffneten oder ganz geschlossenen Elektroventils mit konstanter Öffnungsfrequenz und variabler Öffnungsdauer entsprechend dem Ergebnis einer Temperaturmessung des erwärmten Gases, die am Auslaß des zweiten Kanals des Wärmetauschers erhalten wird,
- durch Verwendung eines Ventils mit schrittweiser Öffnung.

6. Verfahren nach einem der Ansprüche 1 bis 5,
**dadurch gekennzeichnet, daß** die Quelle (1) für warmes Fluid ein Gaskompressor (20) ist, und dadurch, daß das warme Fluid aus dem Öl besteht, das das Kühlmittel des Kompressors bildet.

7. Verfahren nach Anspruch 6, **dadurch gekennzeichnet, daß** das am Auslaß des ersten Kanals des Wärmetauschers erhaltene erwärmte Gas zu einem Membrangasabscheider (22) gleitet wird.

8. Verfahren nach einem der Ansprüche 6 oder 7,
**dadurch gekennzeichnet, daß** das zu erwärmende Gas Luft ist

9. Verfahren nach einem der Ansprüche 1 bis 5,
**dadurch gekennzeichnet, daß** das warme Fluid warmes Wasser ist.

10. Vorrichtung zur Aufheizung eines Gases, insbesondere zur Durchführung des Verfahrens nach einem der Ansprüche 1 bis 9, mit:
- einer Quelle (1) für warmes Fluid,
- einer Eintrittsleitung (2) zum Transport des Fluids, die die Quelle für warmes Fluid mit dem Einlaß (10) eines ersten Kanals (8) eines Wärmetauschers (4) verbindet,
- einer Austrittsleitung (5) zum Transport des Fluids, die an ihrem stromaufwärtigen Teil an dem Auslaß des ersten Kanals angeschlossen ist,
- einer Quelle (12, 20) für zu erwärmendes Gas, und
- einer kühlen Gasleitung (13), die die Quelle für zu erwärmendes Gas mit dem Einlaß (14) eines zweiten Kanals (9) des Wärmetauschers verbindet,
**dadurch gekennzeichnet, daß** sie folgendes umfaßt:
- eine Abzweigleitung (3), die an ihrem stromaufwärtigen Teil an einem primären Punkt (17) der Eingangsleitung, der zwischen der Quelle für warmes Fluid und dem Einlaß (10) des ersten Kanals des Wärmetauschers liegt, und an ihrem stromabwärtigen Teil gemäß einer der zwei folgenden Konfigurationen angeschlossen ist:
(i) die Austrittsleitung verbindet den Auslaß des ersten Kanals des Wärmetauschers mit der Quelle für warmes Fluid, wobei die Abzweigleitung dann den primären Punkt mit einem sekundären Punkt (18) der Austrittsleitung verbindet,
(ii) die Abzweigleitung verbindet den primären Punkt (17) mit der Quelle für warmes Fluid, wobei die Austrittsleitung dann an ihrem stromabwärtigen Teil an einem sekundären Punkt (28) der Abzweigleitung angeschlossen ist,
- ein Mittel (7) zum Erzeugen eines Druckabfalls auf der Abzweigleitung zwischen primären Punkt und dem sekundären Punkt,
- ein Durchsatzregelventil (6), das an einer der zwei folgenden Stellen angeordnet ist: auf der Eingangsleitung zwischen dem primären Punkt und dem Einlaß des ersten Kanals des Wärmetauschers, oder aber auf der Austrittsleitung zwischen dem Auslaß des ersten Kanals des Wärmetauschers und dem sekundären Punkt.

11. Vorrichtung nach Anspruch 10, **dadurch gekennzeichnet, daß** das Mittel zur Erzeugung eines Druckabfalls durch die Verwendung eines Durchmesser für die Abzweigleitung erhalten wird, der kleiner als der Durchmesser der Eingangsleitung am primären Punkt ist, an dem die Abzweigleitung angeschlossen ist.

12. Vorrichtung nach Anspruch 10, **dadurch gekennzeichnet, daß** das Mittel zum Erzeugen eines Druckabfalls durch die Verwendung eines Winkelstücks am primären Punkt erhalten wird, an dem der Abzweigleitung angeschlossen ist.

13. Vorrichtung nach Anspruch 10, **dadurch gekennzeichnet, daß** das Mittel zum Erzeugen eines Druckabfalls aus einer kalibrierten Verengung oder einem Walzenventil besteht.

14. Vorrichtung nach einem der Ansprüche 10 bis 13,
**dadurch gekennzeichnet, daß** das Durchsatzregelventil eines der Ventile aus der Gruppe ist, die aus Ventilen der thermostatischen Art, den entweder ganz geöffneten oder ganz geschlossenen Elektroventilen mit konstanter Öffnungsfrequenz und variabler Öffnungsdauer und den Ventilen mit schrittweiser Öffnung besteht.

15. Vorrichtung nach einem der Ansprüche 10 bis 14,
**dadurch gekennzeichnet, daß** die Quelle für warmes Fluid ein Gaskompressor (20) ist, und dadurch, daß das warme Fluid aus dem Öl besteht, das das Kühlmittel des Kompressors bildet.

16. Vorrichtung nach einem der Ansprüche 10 bis 14,
**dadurch gekennzeichnet, daß** die Quelle für warmes Fluid eine Quelle für warmes Wasser ist.

## Claims

1. Method of heating a gas, in which the following arrangements are used:
- a stream D₀ of a hot fluid flows in an incoming line (2) connected in its upstream part to a source (1) of the hot fluid and in its downstream part to the inlet (10) of a first passage (8) of an exchanger (4);
- a portion of the stream D₀ is withdrawn, before it reaches the inlet of the first passage, by means of a branch line (3) connected at its upstream part to a primary point (17) of the incoming line located between the source of hot fluid and the said inlet (10);
- the gas to be heated is made to flow in a second passage (9) of the exchanger so as to carry out, in the exchanger, an exchange of heat between the gas to be heated and the hot fluid, in order to obtain a heated gas at the outlet (15) of the second passage and a cooled hot fluid at the outlet (11) of the first passage;
- the cooled hot fluid emerges from the first passage via an outgoing line (5), which is configured according to one of the two following configurations:
(i) the outgoing line connects the outlet (11) of the first passage of the exchanger to the source (1) of hot fluid, the branch line then connecting the said primary point (17) to a secondary point (18) on the outgoing line;
(ii) the branch line connects the said primary point (17) to the source (1) of hot fluid, the outgoing line then being connected at its downstream part to a secondary point (28) on the branch line;
- a pressure drop (7) is created in the branch line between the primary point and the secondary point;
- the temperature of the heated gas obtained at the outlet of the second passage of the exchanger is regulated (16) by means of a flow control valve (6) located in one of the following two positions: in the incoming line, between the primary point and the inlet of the first passage of the exchanger, or in the outgoing line, between the outlet of the first passage of the exchanger and the secondary point.

2. Method according to Claim 1, **characterized in that** the said pressure drop is in the range from 50 mbar to 3 bar.

3. Method according to Claim 2, **characterized in that** the said pressure drop is in the range from 100 mbar to 1 bar.

4. Method according to one of Claims 1 to 3,
**characterized in that** the said pressure drop is introduced in one of the following three ways:
- by using a diameter of the branch line less than that of the incoming line at the said primary point where the branch line is connected;
- by using, at the said primary point where the branch line is connected, an elbow;
- by using, in the branch line between the primary point and the secondary point, a means (7) for creating a pressure drop.

5. Method according to one of Claims 1 to 4, **characterized in that** the said flow control is carried out in one of the following ways:
- by using a control valve of the thermostatic type;
- by using an on/off solenoid valve having a constant opening frequency and an opening period which varies according to the result of a measurement of the temperature of the said heated gas obtained at the outlet of the second passage of the exchanger;
- by using a valve with a progressive opening.

6. Method according to one of Claims 1 to 5,
**characterized in that** the source (1) of hot fluid is a gas compressor (20) and **in that** the hot fluid is oil constituting the coolant of the compressor.

7. Method according to Claim 6, **characterized in that** the said heated gas obtained at the outlet of the first passage of the exchanger is directed into a membrane-type gas separator (22).

8. Method according to either of Claims 6 and 7, **characterized in that** the said gas to be heated is air.

9. Method according to one of Claims 1 to 5, **characterized in that** the said hot fluid is hot water.

10. Apparatus for heating a suitable gas, especially for implementing the method according to one of Claims 1 to 9, comprising:
- a source (1) of hot fluid;
- an incoming fluid transport line (2) connecting the source of hot fluid to the inlet (10) of a first passage (8) of an exchanger (4);
- an outgoing fluid transport line (5) connected at its upstream part to the outlet of the said first passage;
- a source (12, 20) of gas to be heated; and
- a cold line (13) for gas, connecting the source of gas to be heated to the inlet (14) of a second passage (9) of the exchanger;
**characterized in that** it comprises:
- a branch line (3), connected in its upstream part to a primary point (17) on the incoming line, located between the source of hot fluid and the inlet of the said first passage of the exchanger, and in its downstream part according to one of the two following configurations:
(i) the outgoing line connects the outlet of the first passage of the exchanger to the source of hot fluid, the branch line then connecting the primary point to a secondary point (18) on the outgoing line;
(ii) the branch line connects the primary point to the source of hot fluid, the outgoing line then being connected in its downstream part to a secondary point (28) on the branch line;
- a means (7) for creating a pressure drop in the branch line between the primary point and the secondary point;
- a flow control valve (6) placed in one of the two following positions: in the incoming line, between the primary point and the inlet of the said first passage of the exchanger, or in the outgoing line, between the outlet of the said first passage of the exchanger and the secondary point.

11. Apparatus according to Claim 10, **characterized in that** the said means for creating a pressure drop is obtained by the use of a branch line diameter less than the diameter of the incoming line at the primary point where the branch line is connected.

12. Apparatus according to Claim 10, **characterized in that** the said means for creating a pressure drop is obtained by the use, at the primary point where it is connected to the branch line, of a bend.

13. Apparatus according to Claim 10, **characterized in that** the said means for creating a pressure drop consists of a calibrated restriction or of a throttling valve.

14. Apparatus according to one of Claims 10 to 13, **characterized in that** the said flow control valve is one of the valves of the group consisting of thermostatic-type valves, on/off solenoid valves having a constant opening frequency and a variable opening period, and valves with a progressive opening.

15. Apparatus according to one of Claims 10 to 14, **characterized in that** the source of hot fluid is a gas compressor (20) and **in that** the hot fluid consists of the oil constituting the coolant of the compressor.

16. Apparatus according to one of Claims 10 to 14, **characterized in that** the said source of hot fluid is a source of hot water.
